# EUROPEAN PATENT APPLICATION

(11) **EP 4 528 981 A1**
(43) Date of publication of application: **26.03.2025**
(21) Application number: 23198716.5
(22) Date of filing: 21.09.2023
(51) Int. Cl.: H02J 50/10, H02J 50/12, H02J 50/50

(54) **HIGH VOLTAGE DEVICE AND HIGH VOLTAGE SYSTEM**

(71) Applicant: Hitachi Energy Ltd, 8050 Zürich (CH)
(72) Inventor: SALINAS, Ener, 72210 Västerås (SE); GIRLANDA, Orlando, 72356 Västerås (SE); LUVISOTTO, Michele, 723 34 Västerås (SE); RUSSBERG, Gunnar, 72462 Västerås (SE); MUKHERJEE, Pritam, 72227 Västerås (SE); PRADHAN, Manoj, 72476 Västerås (SE)
(74) Representative: Epping - Hermann - Fischer

(57) **Abstract**

According to an embodiment, the high voltage device (100) comprises a sensor element (1) for measuring a physical quantity in the high voltage device and a receiver coil (2). The receiver coil is configured to be wirelessly supplied with electric power via electromagnetic induction from outside of the high voltage device. The receiver coil and the sensor element are coupled such that electric power induced in the receiver coil is at least partially transferred to the sensor element in order to operate the sensor element. The receiver coil is flat.

## Description

The present disclosure relates to a high voltage device and a high voltage system. Furthermore, the present disclosure relates to a method for operating a high voltage system.

One object to be achieved is to provide a high voltage device with reliable properties. Further objects to be achieved are to provide a high voltage system comprising such a high voltage device and a method for operating such a high voltage system.

First, the high voltage device is specified. For example, during operation of the high voltage device, a potential difference between two electrically conductive components of the high voltage device reaches values of at least 1000 V or at least 1500 V.

According to an embodiment, the high voltage device, in the following also called "HV-device", comprises a sensor element for measuring a physical quantity in the HV-device and a receiver coil. The receiver coil is configured to be wirelessly supplied with electric power via electromagnetic induction from outside of the HV-device. The receiver coil and the sensor element are coupled such that electric power induced in the receiver coil is at least partially transferred to the sensor element in order to operate the sensor element. The receiver coil is flat.

It is important in HV-devices to have the reliability of their properties guaranteed from early stages. Some physical quantities, for example of insulating components of the HV-device, are critical during the entire lifetime of such an HV-device. Therefore, monitoring these physical quantities is considered to be an important task. Yet, the harsh conditions of the operation make monitoring said physical quantities a challenging issue.

In order to measure said physical quantities, electric power is needed. Usually this is provided by a battery. The major issue when using batteries is that they will remain in the location during the lifetime of the HV-device. Chemical decay, eventual leaking and corrosion are strong reasons to avoid batteries. Another attempt is to use optical fibers, but the harsh conditions at their locations can be critical for fibers. Energy harvesting could also be an option. Yet, the monitoring area is restricted to regions near an internal high 50 Hz magnetic field, which requires large harvesting inductors (coils with several turns, 50 Hz) conflicting with the HV environment.

The present invention is, inter alia, based on the idea to provide the electric power for the sensor element with the help of wireless power transfer by means of induction. This overcomes major difficulties such as the harsh medium conditions inside the HV-device. The usage of a flat receiver coil reduces the risk of failure, like short circuits, inside the HV-device. Indeed, when using a flat receiver coil, potential differences over the receiver coil caused by the strong electric field inside the HV-device during operation can be avoided.

The sensor element is, in particular, electrically insulated from the high voltage components of the HV-device, i.e. the components which are operated with high voltages. For example, the sensor element is embedded or arranged in an insulating material of the HV-device. The sensor element is, for example, provided for condition monitoring of the HV-device.

The physical quantity measurable by the sensor element may be moisture or temperature or pressure, for example. Accordingly, the sensor element may be a moisture sensor or temperature sensor or pressure sensor.

The receiver coil has a winding with several turns, e.g. at least two turns or at least ten turns or at least 50 turns. The winding may be of metal, like copper. The winding may be made of Litz wire.

The receiver coil can wirelessly receive electric power via electromagnetic induction. Particularly, the receiver coil is inductively couplable to an emitter coil outside of the HV-device. The emitter coil is not part of the HV-device but is external to the HV-device. According to the physical principle of electromagnetic induction, when the distance between emitter coil and the receiver coil is sufficiently short, an alternating current in the emitter coil induces an alternating current, i.e. induces electrical power, in the receiver coil. The electromagnetic induction is, especially, a magnetic resonance coupling which is a particularly strong inductive coupling.

The HV-device is configured such that the electric power induced in the receiver coil is at least partially transferred to the sensor element. With this transferred electric power, the sensor element can then be operated in order to take measurements of the physical quantity.

The receiver coil is flat. This means that the lateral extensions of the receiver coil parallel to a main extension plane of the receiver coil are considerably larger than the thickness of the receiver coil measured perpendicular to the main extension plane. For example, the thickness of the receiver coil is at most 10% or at most 50 of the smallest lateral extension. For example, in absolute numbers, the thickness of the receiver coil is at most 5 mm or at most 1 mm. The lateral extensions of the receiver coil are, for example, at least one 1 cm or at least 2 cm and/or at most 15 cm or at most 10 cm.

The receiver coil may be a so-called flat coil, also called spiral coil. In a flat coil, all turns of the winding are, for example, in a common plane, namely the main extension plane of the coil. That is, the thickness of the coil is then mainly determined by the thickness of the used wire.

The receiver coil may also be arranged or embedded in an electrically insulating material of the HV-device. The receiver coil may be electrically insulated from the high voltage components of the HV-device.

The HV-device may comprise one or more further sensor elements. Moreover, it may comprise one or more communication devices, particularly wireless communication devices, for communicating the measurements to an operator. Like the sensor element, the further sensor element(s) and/or the communication device(s) may be wirelessly supplied with electric power with the help of the receiver coil. The sensor element may be a DC element. In this case, an AC to DC converter may be arranged between the load coil and the sensor element.

Like the receiver coil, the sensor element may be flat. Its thickness is, for example, at most 5-times thicker than the thickness of the receiver coil or it may be thinner than the coil. Moreover, all other components of the sensing system besides the sensor element and the receiver coil, like the one or more communication devices and/or the AC to DC converter may be flat. Also for these components, the respective thickness may be at most 5-time the thickness or at most the thickness of the receiver coil. Thicknesses of the sensor element and other components of the sensing system are also measured perpendicular to the main extension plane of the receiver coil.

In other words, not only the receiver coil may be flat but the whole sensing system of the HV-device with all components contributing to the powering of the sensor element and the measuring with the help of the sensor element may be flat, e.g. with a thickness of at most 5-times the thickness of the receiver coil. The thickness of the sensing system and each component thereof may be at most 5 mm or at most 2 mm or at most 1 mm.

According to a further embodiment, the receiver coil realizes an LC-circuit having the eigenfrequency f0. Particularly, the receiver coil may comprise, besides the winding, a capacitor. The capacitor my comprise two plates which face each other. The eigenfrequency f0 of the receiver coil or the LC-circuit, respectively, is, for example, at least 100 kHz and at most 100 MHz. The dimensions of the plates of the capacitor, measured perpendicular to the main extension plane of the receiver coil, may be small, e.g. at most 5-times the thickness of the receiver coil.

According to a further embodiment, the HV-device additionally comprises a load coil. The load coil may also be arranged or embedded in the electrically insulating material of the HV-device. For example, the load coil is electrically insulated from the high voltage components of the HV-device.

The load coil may, like the receiver coil, comprise a winding with at least two or at least ten or at least 50 turns. The winding is also made of metal, like copper, for example. The winding may be made of Litz wire.

According to a further embodiment, the load coil is inductively coupled to the receiver coil such that electric power induced in the receiver coil is at least partially wirelessly transferred to the load coil via electromagnetic induction. Particularly, the load coil and the receiver coil are galvanically separated from each other. However, the distance between the receiver coil and the load coil is such that wireless power transfer via electromagnetic induction is possible. For example, the smallest distance (the gap) between the windings of the receiver coil and the load coil is smaller than or equal to the smallest diameter of the receiver coil or the load coil. The smallest distance between the windings of the load coil and the receiver coil may be greater than 1/10 of the smallest diameter of the load coil and/or the receiver coil. The smallest diameter is, in particular, the inner diameter. For example, the outer diameter or greatest diameter, respectively, of the receiver coil is at most 3-times and at least 1.5-times the outer diameter of the load coil.

The lateral extensions of the load coil, measured along the main extension plane of the load coil, deviate, for example, by at most 50 % from the lateral extensions of the receiver coil. Particularly, the lateral extensions of the load coil are smaller than the lateral extensions of the receiver coil.

According to a further embodiment, the load coil is electrically connected or galvanically connected to the sensor element. In this way, the sensor element can be supplied with at least a part of the electric power which was transferred from the receiver coil to the load coil. Particularly, this part of the transferred electric power is sufficient to operate the sensor element.

According to a further embodiment, the receiver coil is floating. In other words, the receiver coil is galvanically isolated from any other electrically conductive element of the HV-device, particularly from the sensor element and the load coil. By realizing the receiver coil as a floating coil, it can be made a very efficient resonator with the eigenfrequency f0 since conductive losses are reduced. This means that the Q-factor of the receiver coil is large. Such a floating receiver coil can particularly efficiently capture the alternating magnetic field generated by the emitter coil when this alternating magnetic field oscillates with the eigenfrequency f0 or a frequency close to the eigenfrequency f0. Thus, wireless power transfer of electric power from the emitter coil to the receiver coil is particularly efficient. According to a further embodiment, the load coil is flat. Concerning the dimensions of the load coil, particularly the relations between the lateral extensions and the thickness, the same as disclosed for the receiver coil is disclosed for the load coil. The load coil may be a flat coil.

According to a further embodiment, the receiver coil and the load coil are arranged parallel to each other. This means that the main extension planes of the receiver coil and the load coil are arranged parallel to each other. For example, the distance between the main extension planes is at most the thickness of the receiver coil or of the load coil.

According to a further embodiment, the receiver coil and the load coil are arranged in a common plane. This may mean that the main extension planes of the load coil and the receiver coil coincide. Particularly, the receiver coil and the load coil are arranged such that a plane can be drawn through both coils, wherein said plane intersects with each of the turns of the windings of both coils.

According to a further embodiment, the common plane, in which the load coil and the receiver coil are arranged, is an equipotential plane during operation of the HV-device. In other words, the receiver coil and the load coil lie on the same electrical potential during operation of the HV-device. This helps to avoid discharges, i.e. short-circuits, between the receiver coil and the load coil.

According to a further embodiment, the sensor element and/or one or more or all other components of the sensing system are arranged in the same plane as the receiver coil. Thus, the main extension plane of the receiver coil intersects with the sensor element and/or the one or more other components of the sensing system.

According to a further embodiment, the receiver coil and the load coil are arranged concentrically. This means that the windings of the coils are wound around a common center. The concentric arrangement of the two coils results in a particularly efficient inductive coupling between the two coils.

According to a further embodiment, the receiver coil surrounds the load coil. Particularly, in top view onto the main extension planes of the coils or onto their common plane, the receiver coil, i.e. the winding thereof, is formed around the load coil, i.e. the winding thereof. The alternating magnetic field generated by the receiver coil is then particularly high at the location of the load coil so that a large portion of the electric power induced in the receiver coil can be transferred to the load coil.

According to a further embodiment, the receiver coil and the load coil are arranged next to each other. This means that in top view onto their main extension planes or onto their common plane, the coils do not overlap with each other. Particularly, in this top view, the winding of the receiver coil does not surround the winding of the load coil, and the winding of the load coil does not surround the winding of the receiver coil.

According to a further embodiment, the receiver coil is electrically or galvanically connected to the sensor element. In this case, the load coil is omitted. This embodiment saves space and material compared to the case where the load coil is used. On the other hand, the usage of the receiver coil together with the load coil can improve the efficiency of the wireless power transfer.

According to a further embodiment, the receiver coil comprises a core of a ferromagnetic material, e.g. of ferrite. The turns of the winding of the receiver coil may be formed around this core. The core may be of an amorphous or nanocrystalline material.

According to a further embodiment, the core is shaped as a sheet or as a platelet or as a film. In other words, the core is flat. The winding may then cover the top side and bottom side of the core. With a flat core, the receiver coil can be formed flat.

According to a further embodiment, the HV-device is a power transformer or a converter or a bushing or capacitor. In case of a converter, the HV-device may comprise a power semiconductor device, like a MISFET or MOSFET or an IGBT or a thyristor.

According to a further embodiment, the power semiconductor device has a first main electrode, which may be a source or emitter electrode, and a second main electrode, which may be a drain or collector electrode. During operation, high voltage is applied between the first and the second main electrode. The main extension plane of the receiver coil may be arranged between the first and the second main electrode.

Next, the high voltage system, in the following also called "HV-system", is specified.

According to an embodiment, the HV-system comprises the HV-device according to any of the embodiments described herein. Furthermore, the HV-system comprises an induction device. The induction device comprises a power supply and an emitter coil. The induction device is external to the HV-device and is configured such that, by operating the power supply, an alternating electric current is generated in the emitter coil in order to wirelessly transfer electric power to the receiver coil via electromagnetic induction.

Since the HV-system comprises the HV-device as described herein, all features disclosed for the HV-device are also disclosed for the HV-system and vice versa.

The power supply may be an AC generator. Particularly, the power supply is configured to generate an alternating electric current with the above-mentioned frequency f0.

According to a further embodiment, the induction device further comprises a supply coil. The supply coil is electrically or galvanically connected to the power supply.

According to a further embodiment, the supply coil is inductively coupled to the emitter coil such that the electric power generated in the supply coil by means of the power supply is at least partially wirelessly transferred to the emitter coil via electromagnetic induction. For example, a distance between the supply coil and the emitter coil is at most 10 cm or at most 5 cm in order to guarantee a sufficiently strong inductive coupling.

According to a further embodiment, the emitter coil realizes an LC-circuit having an eigenfrequency f1 in the range of f0 ± 10% or ± 5% or ± 1%. Thus, the emitter coil comprises, besides the winding, a capacitor. The emitter coil and the receiver coil have, in particular, the same or almost the same eigenfrequency.

According to a further embodiment, the emitter coil is floating, i.e. is galvanically isolated from any other component of the induction device. This has the same beneficial effect as discussed above, namely a high Q-factor. When an alternating electric current with the eigenfrequency f1 or almost the eigenfrequency f1 is induced in the floating emitter coil, the emitter coil generates an alternating magnetic field with a high range so that it can inductively couple to a receiver coil being relatively far away, e.g. at least 20 cm.

The optical analogue to the floating emitter coil is a collimating lens. The optical analogue to the floating receiver coil would be a converging lens which collects as much as possible of the magnetic field and transforms it to alternating electric current.

According to a further embodiment, the supply coil and/or the emitter coil are both flat. Flat is defined in the same way as for the receiver coil. Lateral extensions of the supply coil and/or the emitter coil may be greater than those of the receiver coil and/or of the load coil. For example, lateral extensions of the supply coil and/or the emitter coil are at least two times or at least five times greater than those of the receiver coil and/or the load coil.

According to a further embodiment, the supply coil and/or the emitter coil are solenoidal coils. The supply coil and/or the emitter coil may comprise a ferromagnetic core, e.g. of ferrite.

Next, the method for operating the HV-system is specified.

According to an embodiment, the method comprises the step of providing an HV-system according to any of the embodiments described herein. The induction device is then brought into proximity of the HV-device, e.g. at a distance of less than 1 m and/or of more than 20 cm or more than 30 cm. In a further step, the power supply is operated such that it generates an alternating electric signal. Particularly, the power supply is operated such that it generates an alternating electric signal with a frequency in the range of f1 ± 10% or ± 1%.

When bringing the induction device into the proximity of the HV-device, the emitter coil may be arranged between the supply coil and the receiver coil.

For example, the portion of the transferred power supplied to the sensor element is at least 1 W or at least 3 W and/or at most 10 W or at most 7 W.

Hereinafter, the HV-device and the HV-system will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.
Figures 1 to 6 show different exemplary embodiments of the HV-device in different views,
Figures 7 to 9 show different exemplary embodiments of the HV-system,
Figures 10 and 11 show a further exemplary embodiment of the HV-device,
Figure 12 shows a top view of a section of figure 3.

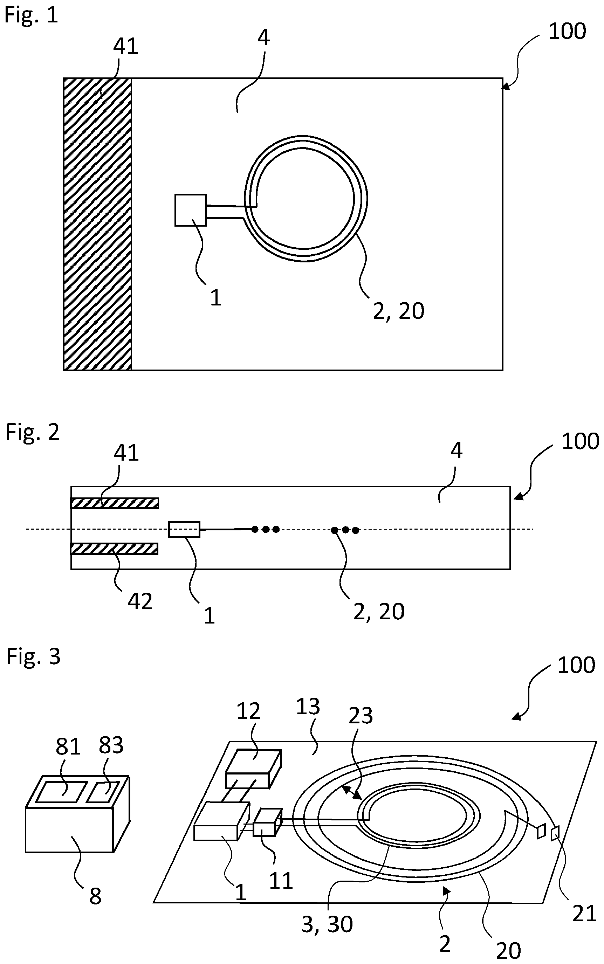

Figures 1 and 2 show a first exemplary embodiment of the HV-device 100 in top view (Figure 1) and in a cross-sectional view (see Figure 2). The HV-device comprises two electrically conductive element 41, 42, e.g. conductor tracks, which, during operation of the HV-device, are on different electrical potentials. A potential difference between the two elements 41, 42 is, for example, at least 1000 V during operation. Both elements 41, 42 are embedded in an electrically insulating body 4, like plastic or cellulose.

The HV-device 100 further comprises a sensor element 1, which might be a moisture sensor or a temperature sensor or a pressure sensor, for example. The sensor element 1 is electrically connected to a receiver coil 2 having a winding 20. The receiver coil 2 can inductively couple to an external emitter coil so that the receiver coil 2 can be wirelessly provided with electric power via electromagnetic induction. The electric power can then at least partially be used to operate the sensor element 1.

In the exemplary embodiment of Figures 1 and 2, the sensor element 1 and the receiver coil 2 are also embedded in the electrically insulating body 4 of the HV-device 100. Particularly, both the sensor element 1 and the receiver coil 2 are electrically insulated from the high voltage components 41, 42 of the HV-device 100.

In Figure 2, one can see that the receiver coil 2 is realized as a flat coil with all turns of the winding 20 being arranged in one plane, namely the main extension plane of the receiver coil 2. Also the sensor element 1 is flat. Such a flat design is particularly beneficial in HV-devices since short circuits inside the receiver coil and/or the sensor element 1 can then be avoided. Moreover, one can see that the receiver coil 2 and the sensor element 1 are arranged in a common plane which constitutes an equipotential plane during operation of the HV-device 100.

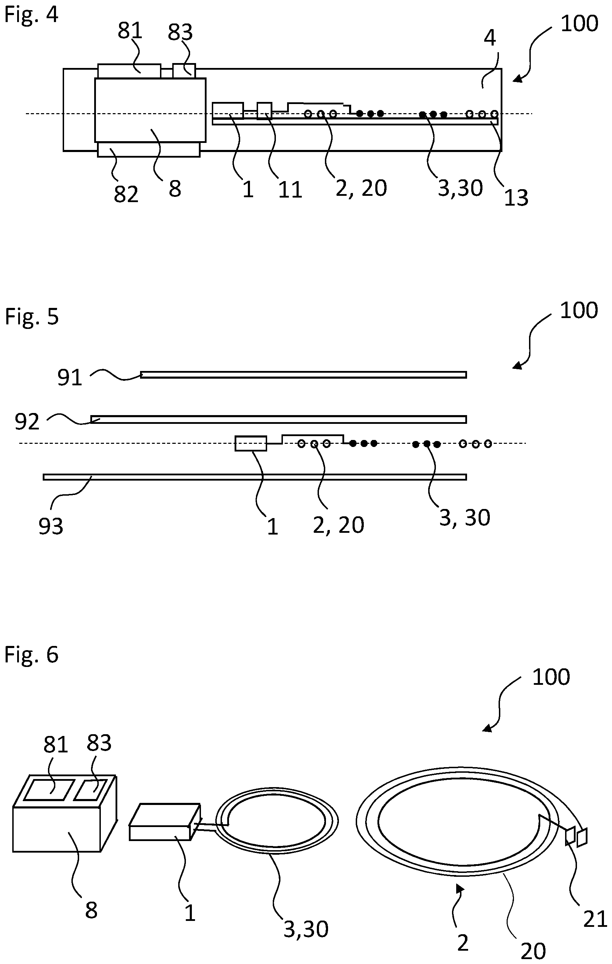

Figures 3 and 4 show a further exemplary embodiment of the HV-device 100 in a perspective view (Figure 3) and a cross sectional view (Figure 4). Here, the HV-device 100 is a converter comprising a power semiconductor device 8, which is, for example, a MOSFET or an IGBT or a thyristor.

The HV-device 100 comprises again the sensor element 1 and the receiver coil 2. In this case, however, the receiver coil 2 is floating. The receiver coil 2 comprises, besides the winding 20, a capacitor 21 so that the receiver coil 2 realizes an LC-circuit having the eigenfrequency f0.

The HV-device 100 of Figure 3 further comprises a load coil 3, which is galvanically connected to the sensor element 1 and inductively coupled to the receiver coil 2. The load coil 3 comprises a winding 30. Like the receiver coil 2 and the sensor element 1, the load coil 3 is flat. The receiver coil 2 and the load coil 3 are arranged in a common plane and the windings 20, 30 of the coils 2, 3 are concentric. The winding 20 of the receiver coil 2 surrounds the winding 30 of the load coil 3. The distance/gap 23 between the coils 2, 3 or windings 20, 30, respectively, is, for example, equal to the inner diameter of the load coil 3 or deviates at most 10% therefrom.

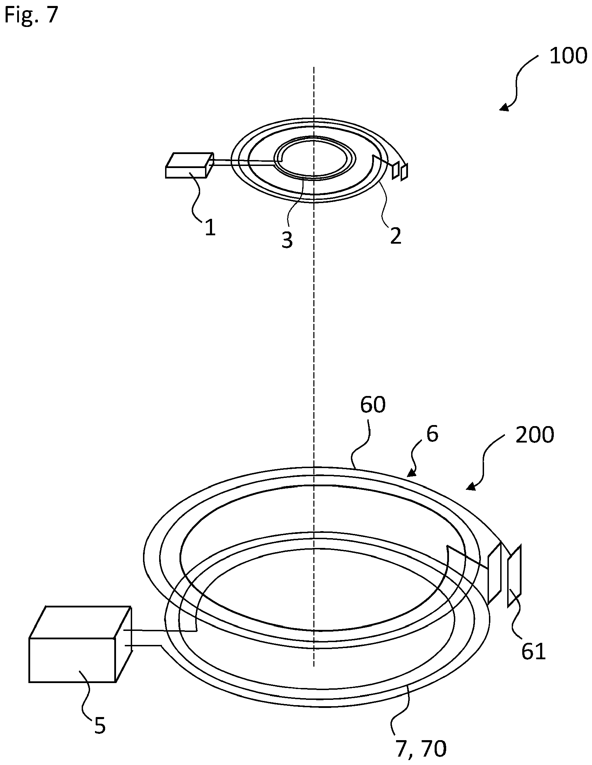

Indeed, the gap 23 between both coils 2, 3 should neither be too small nor too large. If it is too large, the load coil 3 will not be able to receive the field from the receiver coil 2. If the gap is too small, the load coil 3 will interfere with the receiver coil 2 and, therefore, with the strong coupling with the emitter coil 6 (see also figure 7).

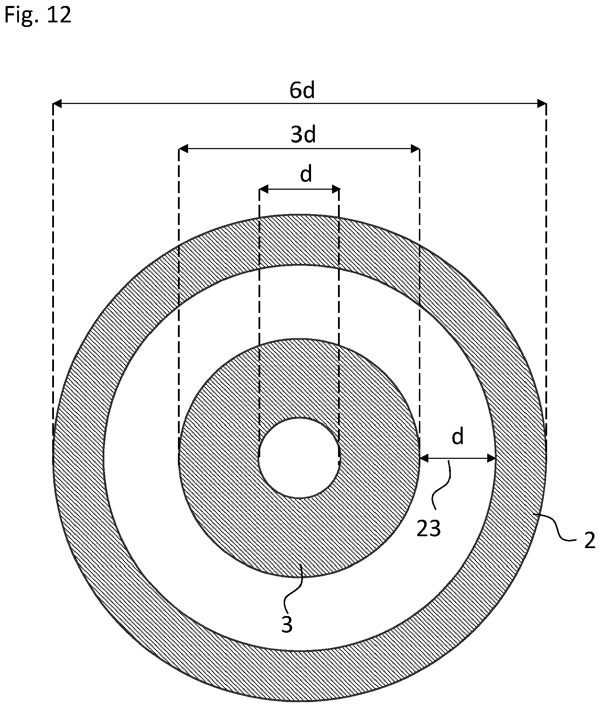

Figure 12 shows the load coil 3 and the receiver coil 2 of figure 3 in top view with the dimensions as they may be realized indicated. The inner diameter of the load coil 3 is d and an outer diameter 3.d. The receiver coil 2 has an inner diameter of 5.d and an outer diameter of 6-d. Accordingly, the gap 23 has the length d measured in radial direction. As an example d = 1 cm. Thus, the load coil 3 has an outer diameter of 3 cm and an inner diameter of 1 cm. The receiver coil 2 has an outer diameter of 6 cm and an inner diameter of 5 cm. The gap 23 between the windings 20, 30 is 1 cm.

Also in the exemplary embodiment of Figure 3, the coils 2, 3 and the sensor element 1 as well as the power semiconductor device 8 are embedded in an insulating body 4 which is not shown in Figure 3 due to clarity reasons but is shown in Figure 4.

As can be further seen in figure 3, the HV-device 100 comprises an AC to DC converter 11 between the load coil 3 and the sensor element 1. Moreover, a communication device 12 is signally connected to the sensor element 1 in order to transmit the measurements taken with the help of the sensor element 1 to the exterior.

The sensor element 1, the coils 2, 3, the AC to DC converter 11 and the communication device 12 are all arranged on a common carrier 13. This carrier 13 may be flexible. It may be a PCB. The whole sensing system comprising the carrier 13 and the elements arranged thereon is, in particular, flat with a maximum thickness not exceeding 5-times the thickness of the coil 2, for example.

In the cross sectional view of Figure 4 one can better see that the receiver coil 2 and the load coil 3 as well as the sensor element 1 are indeed arranged in a common plane, which is indicated by the horizontal dashed line. It can also be seen that the common plane is arranged between two main electrodes 81, 82 of the power semiconductor device 8. The main electrode 81 is, for example, an emitter or source electrode and the main electrode 82 is, for example, a collector or drain electrode. The electrode 83 may be a gate electrode.

Figure 5 shows a further exemplary embodiment of the HV-device 100. Here, there sensor element 1, the receiver coil 2 and the load coil 3 are formed and are arranged relative to each other as in the previous exemplary embodiment. However, the HV-device 100 is a bushing for a power transformer having a plurality of conductive foils 91, 92, 93 which constitute equipotential planes. The common plane in which the receiver coil 2 and the load coil 3 are arranged, is also an equipotential plane.

The exemplary embodiment of the HV-device 100 of Figure 6 is similar to the one of Figure 3 with the difference that the receiver coil 2 and the load coil 3 are now not arranged concentrically to each other but laterally next to each other. Nevertheless, both coils 2, 3 are still arranged in a common plane.

Figure 7 shows an exemplary embodiment of the HV-system. The HV-system comprises an HV-device 100 similar to the one of Figure 3, only the power semiconductor device 8 is not shown for clarity reasons. Particular, the floating receiver coil 2 is an LC-circuit with the eigenfrequency f0. The load coil 3 and the receiver coil 2 are arranged in a common plane and are concentric to each other.

The HV-system further comprises an induction device 200 which has a power supply 5 for generating an alternating electric signal, an emitter coil 6 and a supply coil 7. The emitter coil 6 and the supply coil 7 are both realized as flat coils. They are not arranged in a common plane but are stacked, i.e. they are arranged in parallel planes which are spaced apart from each other. The emitter coil 6 is realized as a floating coil 6 having a winding 60 and a capacitor 61 so that the emitter coil 6 constitutes an LC-circuit. The eigenfrequency f1 of the emitter coil 6 is equal to the eigenfrequency f0 of the receiver coil 2 or at least close to it, e.g. with a maximum deviation of 10% or 5% or 1%.

The supply coil 7 with its winding 70 is galvanically connected to the power supply 5.

For operation of the HV-system according to Figure 7, the induction device 200 is brought into proximity of the HV-device 100. For example, the emitter coil 6 is brought into a distance of about 40 cm from the receiver coil 2. The power supply 5 is operated such that it generates an alternating electric current of a frequency f2 close to f1 and f0 in the supply coil 7. The supply coil 7 is inductively coupled to the emitter coil 6 so that electric power is wirelessly transferred to the emitter coil 6. In the emitter coil 6, an alternating current with the frequency f2 is induced. Due to the resonant character of the emitter coil 6 close to the frequency f2, namely at the frequency f1, a comparably strong alternating magnetic field is generated in the region of the receiver coil 2.

Since the receiver coil 2 is also resonant close to the frequency f2, namely at f0, it efficiently transforms the alternating magnetic field into an alternating electric current inside the winding of the receiver coil 2. The corresponding alternating magnetic field generated by the receiver coil 2 is strong in the region of the load coil 3 since the load coil 3 and the receiver coil 2 are located close to each other. Accordingly, a relatively large part of the electric power of the receiver coil 2 is wirelessly transferred to the load coil 3. The transferred part of the electric power can then at least partially be used to operate the sensor element 1. For example, the electric power reaching the sensor element 1 is in a range between 1 W and 5 W.

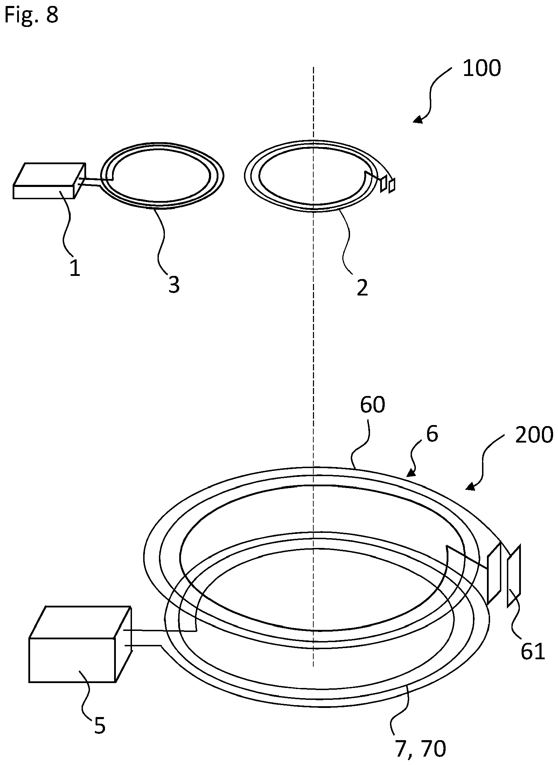

In the exemplary embodiment of the HV-system of Figure 8, the same induction device 200 as in Figure 7 is used. The HV-device 100 is the one of Figure 6, only the power semiconductor device 8 is not shown.

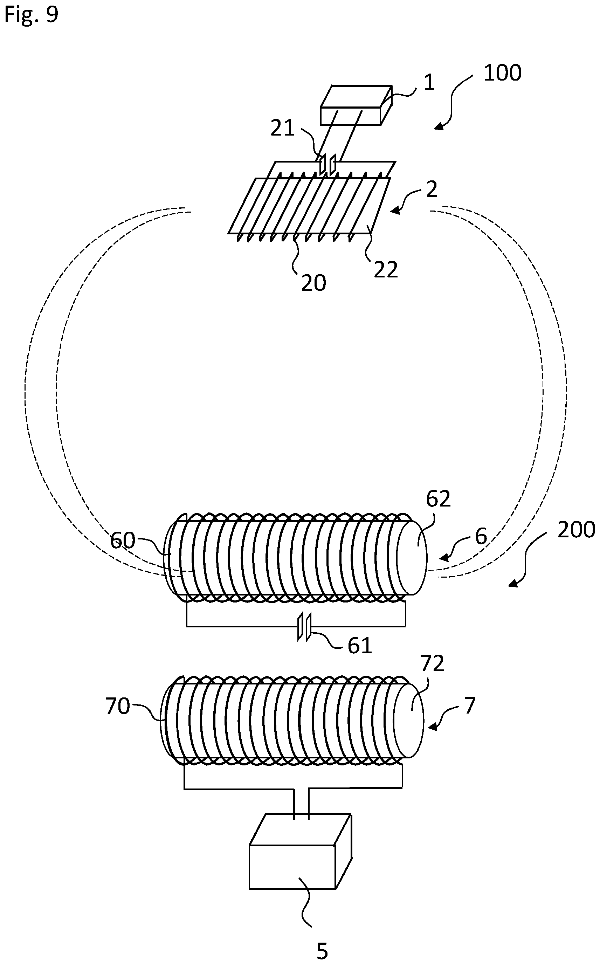

Figure 9 shows a further exemplary embodiment of the HV-system with another exemplary embodiment of the HV-device 100. In difference to the previous exemplary embodiments, the load coil is dismissed and the receiver coil 2 is galvanically connected to the sensor element 1. Also, here the receiver coil 2 comprises, besides the winding 20, a capacitor 21 in order to realize an LC-circuit. However, since the receiver coil 2 is not floating but electrically connected to the sensor element 1, the Q-factor is not as good as in the previous exemplary embodiments. This is at least partially compensated by the receiver coil 2 comprising a core 22 of a ferromagnetic material, e.g. ferrite. The core 22 is formed as a sheet and the winding 20 is wound around the sheet so that the receiver coil 2 is still flat. The core 22 of the ferromagnetic material acts as a magnetic field concentrator in order to have a sufficiently strong magnetic field inside the winding 20.

Although not shown in the figures, the combination of a floating receiver coil 2 with a core 22 of ferromagnetic material could be particularly beneficial for high efficiency.

The induction device 200 of Figure 9 is also different from the one described before. Here, the emitter coil 6 and the supply coil 7 are not formed as flat coils but as solenoidal coils each comprising a core 62, 72 of a ferromagnetic material, like ferrite. Also, in this way, good inductive coupling between the coils 6 and 7 as well as a far-reaching alternating magnetic field can be realized. In the induction device of Figure 9, the solenoidal emitter coil 6 is floating and realized as an LC-circuit having the eigenfrequency f0.

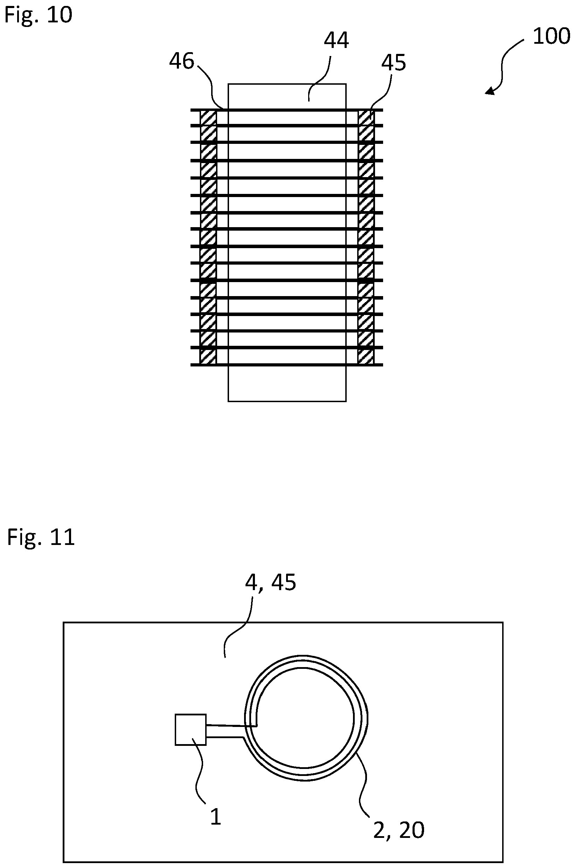

Figure 10 shows a further exemplary embodiment of the HV-device 100. Here, the HV device 100 is a power transformer. Only one winding of the power transformer is shown. The winding comprises a plurality of turns 46 wound around a core 44. Each two axially spaced turns 46 are spaced from each other in axial direction by a spacer element 45.

Figure 11 shows a detailed view of one of these spacer elements 45. The spacer element comprises an electrically insulating body 4 made of cellulose or press paper, respectively. A sensing system comprising a sensor element 1 and a receiver coil as described in connection with the previous figures is integrated into the insulating body 4.

The embodiments shown in Figures 1 to 12 as stated represent exemplary embodiments; therefore, they do not constitute a complete list of all embodiments according to the HV-device and the HV-system. Actual HV-devices and HV-systems may vary from the embodiments shown in terms of arrangements, elements and sizes, for example.

### Reference Signs

- 1: sensor element
- 2: receiver coil
- 3: load coil
- 4: insulating body
- 5: power supply
- 6: emitter coil
- 7: supply coil
- 8: power semiconductor device
- 11: AC to DC converter
- 12: communication device
- 13: carrier
- 20: winding
- 21: capacitor
- 22: core
- 23: gap
- 30: winding
- 41: conductive element / conductor track
- 42: conductive element / conductor track
- 44: core
- 45: spacer element
- 46: turn
- 60: winding
- 61: capacitor
- 62: core
- 70: winding
- 72: core
- 81: first main electrode
- 82: second main electrode
- 83: gate electrode
- 91 to 93: conductive foils
- 100: HV-device
- 200: induction device

## Claims

1. HV-device (100) comprising
- a sensor element (1) for measuring a physical quantity in the HV-device (100) and
- a receiver coil (2), wherein
- the receiver coil (2) is configured to be wirelessly supplied with electric power via electromagnetic induction from outside of the HV-device (100),
- the receiver coil (2) and the sensor element (1) are coupled such that electric power induced in the receiver coil (2) is at least partially transferred to the sensor element (1) in order to operate the sensor element (1),
- the receiver coil (2) is flat.

2. HV-device (100) according to claim 1, wherein
- the receiver coil (2) realizes an LC-circuit having the eigenfrequency f0.

3. HV-device (100) according to claim 1 or 2, further comprising
- a load coil (3), wherein
- the load coil (3) is inductively coupled to the receiver coil (2) such that electric power induced in the receiver coil (2) is at least partially wirelessly transferred to the load coil (3) via electromagnetic induction,
- the load coil (3) is electrically connected to the sensor element (1),
- the receiver coil (2) is floating.

4. HV-device (100) according to claim 3, wherein
- the load coil (3) is flat,
- the receiver coil (2) and the load coil (3) are arranged in a common plane.

5. HV-device (100) according to claim 4, wherein
- the common plane is an equipotential plane during operation of the HV-device.

6. HV-device (100) according to claim 4 or 5, wherein
- the receiver coil (2) and the load coil (3) are arranged concentrically.

7. HV-device (100) according to claim 6, wherein
- the receiver coil (2) surrounds the load coil (3).

8. HV-device (100) according to claim 4 or 5, wherein
- the receiver coil (2) and the load coil (3) are arranged next to each other.

9. HV-device (100) according to claim 1 or 2, wherein
- the receiver coil (2) is electrically connected to the sensor element (1).

10. HV-device (100) according to any one of the preceding claims, wherein
- the receiver coil (2) comprises a core (22) of a ferromagnetic material.

11. HV-device (100) according to any one of the preceding claims, wherein
- the HV-device (100) is a power transformer or a converter or a bushing or a capacitor.

12. HV-system comprising
- the HV-device (100) according to any one of the preceding claims,
- an induction device (200) comprising a power supply (5) and an emitter coil (6), wherein
- the induction device (200) is external to the HV-device (100),
- the induction device (200) is configured such that, by operating the power supply (5), an alternating electric current is generated in the emitter coil (6) in order to wirelessly transfer electric power to the receiver coil (2) via electromagnetic induction.

13. HV-system according to claim 12, wherein
- the HV-device (100) is the HV-device (100) according to claim 2 or any one of claims 3 to 11 in its dependency on claim 2,
- the induction device (200) further comprises a supply coil (7), wherein
- the supply coil (7) is electrically connected to the power supply (5),
- the supply coil (7) is inductively coupled to the emitter coil (2) such that the electric power generated in the supply coil (7) by means of the power supply (5) is at least partially wirelessly transferred to the emitter coil (6) via electromagnetic induction,
- the emitter coil (6) realizes an LC-circuit having an eigenfrequency f1 in the range of f0 ± 10%,
- the emitter coil (6) is floating.

14. HV-system according to claim 12 or 13, wherein
- the supply coil (7) and the emitter coil (6) are both flat.

15. HV-system according to claim 12 or 13, wherein
- the supply coil (7) and the emitter coil (6) are both solenoidal coils each comprising a ferromagnetic core (62, 72) .
